# EUROPEAN PATENT SPECIFICATION

(11) **EP 1 455 587 B1**
(45) Date of publication and mention of the grant of the patent: **31.10.2007**
(21) Application number: 02783090.0
(22) Date of filing: 25.11.2002
(51) Int. Cl.: A23D 7/00

(54) **FAT CONTINUOUS FOOD PRODUCT**
NAHRUNGSMITTELPRODUKTE MIT KONTINUIERLICHER FETTPHASE
PRODUIT ALIMENTAIRE CONTINU A BASE DE MATIERES GRASSES

(30) Priority: 19.12.2001 EP 01310648
(43) Date of publication of application: 15.09.2004
(73) Proprietor: UNILEVER N.V., 3013 AL Rotterdam (NL); UNILEVER PLC, London, Greater London EC4P 4BQ (GB)
(72) Inventor: CUNDEN, S. N., Unilever R & D Vlaardingen, 3133 AT Vlaardingen (NL); PELAN, E. G., Unilever R & D Vlaardingen, 3133 AT Vlaardingen (NL)
(74) Representative: Joppe, Hermina Laura Petronella
(86) International application number: PCT/EP2002/013166
(87) International publication number: WO 2003/051135

(56) References cited:
- EP-A- 0 480 531
- WO-A-01/91570
- IE-B- 35 802
- US-B1- 6 306 449

## Description

### Field of the invention

The invention relates to a fat continuous, spreadable food product, which comprises a dispersed aqueous phase containing protein and which comprises a primary emulsifier polyglycerol polyricinoleate and one or more co-emulsifiers.

### Background to the invention

Fat continuous spreadable food products are used by consumers as an underlayer on bread or toast or for other purposes such as shallow frying of food stuff, baking ingredient, hot toppings.

Examples of such spreadable food products are margarine, butter, and low fat spreads.

There is a desire among consumers for products like margarine to be stable upon storage, even during storage at elevated ambient temperature of from 25 to 40 °C.

It is known that use of polyglycerol polyricinoleate as an emulsifier in water in oil compositions improves the stability of these compositions. In the prior art this compound has especially been used for improving the stability of low fat spreads. It's use in high fat spreads of 50 to 90 wt% fat, especially 70 to 90 wt% fat which are subject of the current invention is not widely known.

US-A-5773073 aims at providing a stable oil in water emulsion with a fat level of from 10 to 70 wt% by using as an emulsifier a polyglycerol fatty acid ester the main constituting fatty acid component of which is erucic acid. Despite their alleged stability we have found that such compositions still do not show the desired stability, especially when the fat level is raised above 70 wt%.

Furthermore US 3,966,632 discloses a vegetable oil emulsion containing from 1 to 10 wt% of water and polyglycerol ester of 12-hydroxy-9 octadecenoic acid of dimerized fatty acids of soy bean oil. This emulsifier is said to impart stability to the emulsion. However there is still a desire to improve the stability of such compositions especially at ambient temperature.

US-B-6306449 discloses the use of a wide range of emulsifiers, among which is polyglycerol polyricinoleate for inclusion in a water in oil spread comprising a preferred fat level of 30 to 40 wt% triglycerides.

It is an object of the current invention to provide a food product which is stable under storage at ambient and higher temperatures, spreads easily and shows good organoleptic properties; for example these products do not give a sandy mouth feel.

### Summary of the invention

It has surprisingly been found that a fat continuous product which comprises a specific amount of protein in the dispersed aqueous phase and a fat which has a low solids content at a temperature of 35°C or above, fulfils the objectives as indicated.

Therefore the invention relates to a fat continuous spreadable food product comprising a dispersed aqueous phase, a primary emulsifier polyglycerol polyricinoleate, and one or more co-emulsifiers, wherein the amount of fat is from 50 to 90 wt%, preferably from 70 to 90 wt%, the amount of polyglycerol polyricinoleate is from 0.05 to 5 wt%, the amount of co-emulsifier is up to 0.5 wt% and wherein the dispersed aqueous phase comprises from 0.1 to 0.9 wt% protein on total product and wherein the solid fat content of the fat is below 6 % at 35°C.

In a further aspect the invention relates to a process for the preparation of these products.

### Detailed description of the invention

The invention relates to spreadable food products. Spreadable is defined as being easily spread with a knife on a substrate such as bread, without tearing the bread at the ambient temperature of the product during spreading.

In the description and claims where weight% is used this is weight% on total product weight unless otherwise is indicated.

The products according to the invention are desirably stable under storage at temperatures at or above ambient temperature. This storage stability is determined by the test described in the examples.

Products according to the invention show a phase separation of less than 5 wt % after storage at 35 °C, preferably 40 °C, for 10 weeks, more preferably 26 weeks.

Products according to the invention comprise polyglycerol polyricinoleate, which is commercially available under the name Admul WOL from Quest-International. This ingredient is generally known to be an excellent water in oil emulsifier.

The amount of polyglycerol polyricinoleate in the products of the invention is from 0.05 to 5 wt% on total product weight. Higher amounts lead to products that do not easily de-emulsify in the mouth upon consumption and will hence not show the desired organoleptic properties. Food products comprising polyglycerol polyricinoleate in amounts below 0.05 wt% are not stable under elevated storage temperatures and show phase separation upon storage at 35 °C for several weeks. Preferably the amount of polyglycerol polyricinoleate in food products according to the invention is from 0.2 to 0.4 wt%.

Without wishing to be bound by any theory, applicants believe that the surprisingly good storage stability combined with a good melting behaviour, are due to the presence of the powerful, water-in-oil emulsifier (w/o), polyglycerol polyricinoleate, in combination with a specifically low amount of protein.

The aqueous phase comprises a protein in an amount of from 0.1 to 0.9 wt% on total product.

The protein can be any protein but the protein source is preferably selected from the group comprising milk powders such as skim milk powder, butter milk powder, sodium caseinate, sour whey, denatured whey, and soy protein or a combination thereof.

The most preferred protein is whey protein.

The amount of protein is from 0.1 to 0.9 wt% on total product weight. Lower amounts will not lead to good oral properties and higher amounts were found to negatively influence the emulsion stability of the product. Preferably the amount of protein is from 0.1 to 0.6 wt%, more preferred from 0.2 to 0.5 wt%.

To ensure homogeneous distribution of the aqueous phase in the continuous fat phase, the droplet size distribution D_{3,3} of the dispersed aqueous phase is preferably less than 20 µm, more preferably from 4 to 10 µm. The method to determine D_{3,3} is illustrated in the examples.

It will be appreciated that the droplet size can be controlled by adjusting the processing conditions in the unit operations: e.g. higher rotational speed in a scraped surface heat exchanger will produce correspondingly smaller water droplet size distributions.

The food product according to the invention comprises from 50 to 90 wt%, preferably 60 to 90 wt%, more preferably 70 to 90 wt% of a fat. Even more preferably the amount of fat is from 75 to 85 wt%, more preferably from 75 to 80 wt%.

The fat can be a single fat or a combination of fats. The fat or combination of fats is selected such that the solid fat content is below 6 % at 35°C, preferably below 6 % at 35°C and above, more preferably below 5% at 35°C, even more preferred below 3% at 35°C.

For all embodiments, it is preferred that the lower limit of the solid fat content at 35°C is at least 1.5%.

Most preferred the fat or combination of fats is selected such that the solid fat content is from 2 to 3% at 35°C.

The method to determine solid fat content is described in the examples.

The fat or fat blend may comprise vegetable or animal fats, which may be hydrogenated, interesterified or fractionated. Suitable animal fats may consist of butterfat tallow or hydrogenated fish oil. Suitable vegetable fats can for example be selected from the group comprising bean oil, sunflower oil, palm kernel oil, coconut oil, palm oil, rapeseed oil, cotton seed oil, maize oil, or their fractions, or a combination thereof. Interesterified fat blends of these fats or optionally with other fats are also encompassed in the invention.

The most preferred fat sources are palm oil and bean oil.

In addition to the primary water-in-oil emulsifier polyglycerol polyricinoleate, the food product according to the invention comprises another emulsifier, the co-emulsifier. This co-emulsifier is preferably also a water-in-oil emulsifier. More preferably this co-emulsifier is selected from the group comprising distilled monoglycerides, citric acid esters of monoglycerides, di-acetyl acetic acid esters of monoglycerides, lactic acid esters of monoglyceride, mono-diglycerides, polyglycerol esters of fatty acids or sorbitan esters of fatty acids.

The most preferred co-emulsifier is a distilled monoglyceride. Even more preferred are combinations of a monoglyceride comprising a saturated fatty acid residue and a monoglyceride comprising an unsaturated fatty acid residue.

The amount of co-emulsifier depends on the type and effectiveness of the emulsifier selected and can be determined by the person skilled in the art. Other factors influencing the amount of co-emulsifier that is required to obtain storage stable products are the amount of fat and the amount of polyglycerol polyricinoleate.

As a general guidance the amount of emulsifier is preferably from 0.05 to 0.5 wt%, more preferred from 0.1 to 0.5 wt%, most preferred from 0.15 to 0.4 wt%.

In case combinations are used of a monoglyceride comprising a saturated fatty acid residue and a monoglyceride comprising an unsaturated fatty acid residue, their total amount is preferably from 0.3 to 0.4 wt%.

The pH of the aqueous phase can be set to the desired value, among others to influence acidic or basic taste impression and to influence microbial stability. Preferably the pH of the aqueous phase in food products according to the invention is from 4.3 to 5.5.

The food products according to the invention optionally contain other ingredients such as preservatives, vitamins, taste and flavour components, colorants such as beta-carotene, antioxidants, or other (non-)starch based stabilisers, or thickeners.

The food product according to the invention is preferably essentially free of starches.

According to another embodiment the products are also essentially free of gelatin.

In this context the term essentially free of means a level of less than 0.1 wt%, more preferred less than 0.01 wt%, even more preferred less than 0.001 wt%.

If the food product is intended for use as a shallow frying agent, preferably an antispattering agent is included in the composition. Antispattering agents serve to reduce spattering of the composition upon heating in a frying pan to about 150 °C. Spattering is believed to be caused by explosive evaporation of water droplets which are present as the dispersed aqueous phase. The method to determine spattering is illustrated in the examples.

Examples of suitable anti-spattering agents include lecithins, citric acid esters, salt and silica particles.

The food product according to the invention can be prepared by any suitable process to prepare such products.

In a preferred process, fat, emulsifier, and optionally further fat phase ingredients are heated such that the fat has melted, followed by mixing with an aqueous phase comprising the protein.

The mixing of the fat phase and the aqueous phase is preferably carried out by using a series of processing equipment, or unit operations, which are common for production of margarine. For example the use of a pin stirrer in combination with a high shear heat exchanger unit, optionally repeating these unit operations several times, is suitable for the preparation of the food products according to the invention.

After mixing of the aqueous phase and the fat phase the resulting product is filled into packaging material. Filling is preferably at a temperature range from 5 to 15 °C.

The invention is now illustrated by the following non-limiting examples.

### Examples

### General

### Storage stability test

Food product was stored in a plastic container at 10, 20, 30, 35 and 40°C for up to 26 weeks. After storage the amount of phase separation was determined by visual examination of the product surface. Storage stable products show a phase separation of less than 5 wt% upon storage at 35 °C for at least 10 weeks, preferably at least 26 weeks. Preferably the phase separation is less than 5 wt% upon storage at 40 °C.

### Method to determine D_{3,3}

The water droplet size was measured using a well known low resolution NMR measurement method. Reference is made to Alderliesten, M.; Part.Part. Syst. Charact. 8 (1991), 237-241.

### Method to determine solid fat content

The solid fat content can be measured by a suitable analytical method such as NMR. The method used is low resolution NMR with Bruker Minispec apparatus. Reference is made to the Bruker minispec application notes 4,5 and 6.

The percentage of solid fat determined by the low resolution NMR technique is defined as the ratio of the response obtained from the hydrogen nuclei in the solid phase and the response arising from all the hydrogen nuclei in the sample. The product of this ratio and one hundred is termed the low resolution NMR solids percent. No correction is made for variations in the proton density between solid and liquid phase. The NMR solids percent for a sample measured at t °C was given the symbol Nₜ.

Suitable instruments adapted to determine the solids fat content are the Bruker Minispecs p20i^{tm}, pc20^{tm}, pc120^{tm}, pc120s^{tm}, NMS120^{tm} and MQ20^{tm}.

Stabilization and tempering procedure was as follows:
- melt fat at 80 °C
- 5 minutes at 60 °C
- 60 minutes at 0 °C
- 30-35 minutes at each chosen measuring temperature.

### Spattering value determination

The spattering behaviour of food products according to the invention was evaluated after storage of the products for 1 or 8 days at 5 °C.

Primary spattering (SV1) was assessed under standardised conditions in which an aliquot of a food product was heated in a glass dish and the amount of fat spattered onto a sheet of paper held above the dish was assessed after the water content of the food product had been driven off by heating.

Secondary spattering (SV2) was assessed under standardised conditions in which the amount of fat spattered onto a sheet of paper held above the dish is assessed after injection of a quantity of 10 ml water into the dish.

In assessment of both primary and secondary spattering value about 25 g food product was heated in a glass dish on an electric plate to about 205 °C. The molten fat that spattered out of the pan by force of expanding evaporating water droplets was caught on a sheet of paper situated 25 cm above the pan. The resulting spattering pattern obtained was compared with a set of standard pictures numbered from 0-10 whereby the number of the photo which best resembled the spattering pattern was recorded as the spattering value. A score of 10 indicates no spattering, whilst a zero indicates very bad spattering. The general indication is as follows.

| *Score* | *Comments* |
|---|---|
| 10 | Excellent |
| 8 | Good |
| 6 | Acceptable |
| 4 | Unsatisfactory for SV1, almost acceptable for SV2 |
| 2 | very poor |

Typical results for household margarines (80 wt% fat) are 8 for primary spattering (SV1) and 5 for secondary spattering (SV2) under the conditions of the above mentioned test.

### Example 1-4

Ingredients are listed in table 1

**Table 1; ingredients in wt%**

| ingredient | 1 | 2 | 3 | 4 | 5 |
|---|---|---|---|---|---|
| Fat# | 79.6 | 79.6 | 79.6 | 79.6 | 55 |
| Hymono 8903 ^{tm} from Quest Int. | 0.2 | 0.2 | | | 0.1 |
| Lecithin | | | | | 0.1 |
| Admul WOL ^{tm} from Quest Int. | 0.5 | 0.5 | 0.3 | 0.3 | 0.3 |
| Admul7803^{tm} | | | 0.2 | 0.2 | |
| (Unsaturated mono-and diglyceride mix from Quest Int.) | | | | | |
| Sweet whey powder | 0.25 | 0.25 | 0.25 | 0.25 | 0.3 |
| Salt | 2.6 | 2.6 | 2.6 | 2.6 | 0.6 |
| water | Up to 100% | Up to 100% | Up to 100% | Up to 100% | Up to 100 wt% |

| | | | | | |
|---|---|---|---|---|---|
| #:the fat used was: Example 1,3: a mixture of 65% palm oil and 35% of a dry fractionated palm olein fraction Example 2,4: mixture of 50% palm oil, 10% of a dry fractionated palm stearine fraction and 40% sunflower oil. Example 5: mixture of bean oil and hardened palm oil | | | | | |

All compositions contained a small amount of colourant, flavour component and preservative. Example 5 contained additionally 0.1 wt% citric acid.

All blends of example 1-4 have a solid fat content of 2.7% at 35 °C.

The N line (% solids at specific temperature) for the fat blend of example 5 was: N10= 19, N20= 11.2, N30 = 4.7, N35= < 2.

### Processing

In a vessel a mixture was prepared of the fat, mono and di glyceride, Admul WOL, Antioxidant, and colorant at a temperature of about 60 °C. In another, separate vessel a mixture was made of sweet whey powder and water which was heated to a temperature of 85 °C for 3 minutes. This mixture was cooled to 60 °C and subsequently mixed with the oil phase in a pre-mix tank at 60 °C, followed by cooling and shearing in a series of A- and C-units^{tm} repeated as necessary to achieve a plastic structure which could be easily packed at around 10 °C in a suitable packaging material.

### Results

| | 1 | 2 | 3 | 4 | 5 |
|---|---|---|---|---|---|
| Storage stability test (26 weeks) | No phase separation at 35°C | No phase separation at 35°C | No phase separation at 35°C | No phase separation at 35°C | No phase separation at 35°C |
| Melting behaviour | Good (1) | Good (1) | Good (1) | Good (1) | Good (1) |

| | | | | | |
|---|---|---|---|---|---|
| Melting behaviour was determined by a test panel of 10 persons on a scale of 1 to 3. 1 indicates fast melting with good release of flavours and taste components 2 indicates average melting behaviour 3 indicates slow melting, leaving a sticky, thick, fatty impression upon consumption. | | | | | |

## Claims

1. Fat continuous spreadable food product comprising a dispersed aqueous phase, a primary emulsifier polyglycerol polyricinoleate, and one or more co-emulsifiers, **characterised in that** the amount of fat is from 50 to 90 wt%, preferably 70 to 90 wt%, the amount of polyglycerol polyricinoleate is from 0.05 to 5 wt%, the amount of co-emulsifier is up to 0.5 wt% and **in that** the dispersed aqueous phase comprises 0.1 to 0.9 wt% protein on total product, and **in that** the solid fat content of the fat is below 6 % at 35°C.

2. Food product according to claim 1, wherein the protein source is selected from the group comprising milk powders such as skim milk powder, butter milk powder, sodium caseinate, sour whey, denatured whey, and soy protein or a combination thereof.

3. Food product according to any of the previous claims wherein the amount of protein is from 0.2 to 0.5 wt%.

4. Food product according to any of the previous claims wherein the droplet size distribution D3,3 of the dispersed aqueous phase is less than 20 µm, preferably from 4 to 10 µm.

5. Food product according to any of the previous claims wherein the amount of fat is from 75 to 85 wt%.

6. Food product according to any of the previous claims wherein the solid fat content is below 5% at 35°C, more preferred below 3% at 35°C, most preferred from 2 to 3% at 35°C.

7. Food product according to any of the previous claims wherein the amount of polyglycerol polyricinoleate is from 0.2 to 0.4 wt%.

8. Food product according to any of the previous claims wherein the co-emulsifier is selected from the group comprising distilled monoglycerides, citric acid esters of monoglycerides, di-acetyl acetic acid esters of monoglycerides, lactic acid esters of monoglyceride, mono-diglycerides, polyglycerol esters of fatty acids or sorbitan esters of fatty acids.

## Patentansprüche

1. Streichfähiges Nahrungsmittelprodukt mit kontinuierlicher Fettphase, das eine dispergierte wässrige Phase, einen primären Emulgator Polyglycerinpolyricinoleat und einen oder mehrere Co-Emulgatoren umfasst, **dadurch gekennzeichnet, dass** die Fettmenge 50 bis 90 Gew.-%, vorzugsweise 70 bis 90 Gew.-% ist, die Menge an Polyglycerinpolyricinoleat 0,05 bis 5 Gew.-% ist, die Menge an Co-Emulgator bis zu 0,5 Gew.-% ist, und dass die wässrige Phase 0,1 bis 0,9 Gew.-% Protein, bezogen auf das Gesamtprodukt, umfasst, und dass der Gehalt des Fetts an festem Fett bei 35 °C unter 6 % ist.

2. Nahrungsmittelprodukt nach Anspruch 1, wobei die Proteinquelle aus der Gruppe, umfassend Milchpulver, zum Beispiel Magermilchpulver, Buttermilchpulver, Natriumcaseinat, Sauermolke, denaturierte Molke und Sojaprotein oder eine Kombination davon, ausgewählt ist.

3. Nahrungsmittelprodukt nach einem der vorangehenden Ansprüche, wobei die Proteinmenge 0,2 bis 0,5 Gew.-% ist.

4. Nahrungsmittelprodukt nach einem der vorangehenden Ansprüche, wobei die Tröpfchengrößenverteilung D3,3 der dispergierten wässrigen Phase weniger als 20 µm, vorzugsweise 4 bis 10 µm, ist.

5. Nahrungsmittelprodukt nach einem der vorangehenden Ansprüche, wobei die Fettmenge 75 bis 85 Gew.-% ist.

6. Nahrungsmittelprodukt nach einem der vorangehenden Ansprüche, wobei der Gehalt an festem Fett bei 35 °C unter 5 %, bevorzugter unter 3 % bei 35 °C, am bevorzugtesten 2 bis 3 % bei 35 °C, ist.

7. Nahrungsmittelprodukt nach einem der vorangehenden Ansprüche, wobei die Menge an Polyglycerinpolyricinoleat 0,2 bis 0,4 Gew.-% ist.

8. Nahrungsmittelprodukt nach einem der vorangehenden Ansprüche, wobei der Co-Emulgator ausgewählt ist aus der Gruppe, umfassend destillierte Monoglyceride, Citronensäureester von Monoglyceriden, Diacetylessigsäureester von Monoglyceriden, Milchsäureester von Monoglycerid, Monodiglyceride, Polyglycerinester von Fettsäuren oder Sorbitanester von Fettsäuren.

## Revendications

1. Produit alimentaire tartinable continu à base de matières grasses comprenant une phase aqueuse dispersée, un émulsifiant primaire constitué de polyricinoléate de polyglycérol, et un ou plusieurs co-émulsifiants, **caractérisé en ce que** la quantité de matières grasses est de 50 à 90 % en poids, de préférence de 70 à 90 % en poids, la quantité de polyricinoléate de polyglycérol est de 0,05 à 5 % en poids, la quantité de co-émulsifiant va jusqu'à 0,5 % en poids et **en ce que** la phase aqueuse dispersée comprend de 0,1 à 0,9 % en poids de protéine par rapport au produit total, et **en ce que** la teneur en matières grasses solides de la matière grasse est inférieure à 6 % à 35 °C.

2. Produit alimentaire selon la revendication 1, dans lequel la source protéinique est choisie dans le groupe comprenant les laits en poudre tels que le lait écrémé en poudre, le babeurre en poudre, le caséinate de sodium, le lactosérum acide, le lactosérum dénaturé, et la protéine de soja ou une combinaison de ceux-ci.

3. Produit alimentaire selon l'une quelconque des revendications précédentes dans lequel la quantité de protéine est de 0,2 à 0,5 % en poids.

4. Produit alimentaire selon l'une quelconque des revendications précédentes dans lequel la distribution de la taille des gouttelettes D3,3 de la phase aqueuse dispersée est inférieure à 20 µm, de préférence de 4 à 10 µm.

5. Produit alimentaire selon l'une quelconque des revendications précédentes dans lequel la quantité de matières grasses est de 75 à 85 % en poids.

6. Produit alimentaire selon l'une quelconque des revendications précédentes dans lequel la teneur en matières grasses solides est inférieure à 5 % à 35 °C, plus préférablement inférieure à 3 % à 35 °C, de manière préférée entre toutes de 2 à 3 % à 35 °C.

7. Produit alimentaire selon l'une quelconque des revendications précédentes dans lequel la quantité de polyricinoléate de polyglycérol est de 0,2 à 0,4 % en poids.

8. Produit alimentaire selon l'une quelconque des revendications précédentes dans lequel le co-émulsifiant est choisi dans le groupe comprenant les monoglycérides distillés, les esters d'acide citrique de monoglycérides, les esters d'acide di-acétylacétique de monoglycérides, les esters d'acide lactique de monoglycéride, les mono-diglycérides, les esters de polyglycérol d'acides gras ou les esters de sorbitan d'acides gras.
